# EUROPEAN PATENT APPLICATION

(11) **EP 4 620 768 A1**
(43) Date of publication of application: **24.09.2025**
(21) Application number: 24165513.3
(22) Date of filing: 22.03.2024
(51) Int. Cl.: B60W 60/00, B62D 15/02

(54) **STEERING INTERVENTIONS FOR VEHICLES**

(71) Applicant: Zenseact AB, 417 56 Göteborg (SE)
(72) Inventor: JOHANNESSON MÅRDH, Lars, 423 51 Torslanda (SE); WRANNE, Staffan, 435 43 Pixbo (SE)
(74) Representative: Zacco Sweden AB

(57) **Abstract**

Methods (S100) for triggering steering interventions for a vehicle (1) and related aspects are disclosed. The method comprises obtaining (5101) a first path (201) and a second path (202) based on a steering capability model of the vehicle. The first path (201) represents a steering capability of the vehicle towards a first lateral direction, and the second path (202) represents a steering capability of the vehicle towards a second lateral direction opposite to the first lateral direction. Moreover, the first path (201) and the second path substantially extend along a traveling direction of the vehicle, where each path defines a set of expected future positions of at least a portion of the vehicle in the event of a corresponding automated steering intervention, at a limit of the steering capability of the vehicle, being executed at a current moment in time. Further, in response to any one of the first path (201) or the second path (202) intersecting a set boundary (203) on the road (300), the method comprises triggering (S105) the automated steering intervention so to cause the vehicle to steer away from the set boundary (203) on the road.

## Description

### TECHNICAL FIELD

The disclosed technology relates to methods and systems for triggering steering interventions for a vehicle. In particular, but not exclusively the disclosed technology relates to methods and systems for performing corrective or evasive steering manoeuvres to prevent a vehicle from moving out of lane or off the road.

### BACKGROUND

In recent years, the automotive industry has seen a significant shift towards the development and implementation of autonomous and semi-autonomous driving technologies. These technologies promise to revolutionize the way we commute and transport goods by enhancing safety, efficiency, and convenience on the roads. Semi-autonomous driving technologies may be referred to as "Advanced Driver Assistance Systems" (ADAS) and autonomous driving technologies may be referred to as "Autonomous Driving" (AD). ADAS and AD will herein be referred to under the common term Automated Driving System (ADS) corresponding to all of the different levels of automation as for example defined by the SAE J3016 levels (0 - 5) of driving automation.

One aspect related to the advancement of these technologies are steering interventions, encompassing both corrective and evasive steering manoeuvres, which play a critical role in ensuring the safety and effectiveness of automated driving systems.

Corrective steering interventions are essential for maintaining the intended trajectory of a vehicle, especially in scenarios where deviations from the planned path occur due to external factors such as road conditions, environmental changes, or unexpected obstacles. These interventions often involve real-time analysis of sensor data, including inputs from cameras, LiDAR, radar, and other perception systems, to detect deviations from the desired path and to calculate the appropriate steering commands necessary to bring the vehicle back on course. The development of precise and responsive corrective steering algorithms is paramount to ensuring smooth and safe user experiences.

Evasive steering interventions, on the other hand, are critical for avoiding imminent collisions or hazards that cannot be mitigated through corrective actions alone. Whether it's swerving to avoid a pedestrian crossing the road or navigating around a suddenly obstructing object, evasive steering interventions demand rapid decision-making and precise execution to effectively safeguard both occupants of the vehicle and surrounding road users. While significant progress has been made in the development of steering interventions for autonomous and semi-autonomous vehicles, challenges persist in optimizing the performance, robustness, and adaptability of these systems across diverse driving scenarios and environmental conditions. Factors such as varying road geometries, unpredictable traffic behaviours, and dynamic road conditions present ongoing challenges that necessitate continuous innovation in steering intervention technologies.

Therefore, there exists a need for novel approaches that enhance the effectiveness, reliability, and safety of steering interventions in autonomous and semi-autonomous vehicles.

### SUMMARY

The herein disclosed technology seeks to mitigate, alleviate or eliminate one or more of the above-identified deficiencies and disadvantages in the prior art to address various problems relating to automated steering interventions for vehicles.

Various aspects and embodiments of the disclosed technology are defined below and in the accompanying independent and dependent claims.

A first aspect of the disclosed technology comprises a method for triggering steering interventions for a vehicle. The method comprises obtaining a first path and a second path based on a steering capability model of the vehicle. The first path represents a steering capability of the vehicle towards a first lateral direction, and the second path represents a steering capability of the vehicle towards a second lateral direction opposite to the first lateral direction. Moreover, the first path and the second path substantially extend along a traveling direction of the vehicle, where each path defines a set of expected future positions of at least a portion of the vehicle in the event of a corresponding automated steering intervention, at a limit of the steering capability of the vehicle, being executed at a current moment in time. Further, in response to any one of the first path or the second path intersecting a set boundary on the road, the method comprises triggering the automated steering intervention so to cause the vehicle to steer away from the set boundary on the road.

Another aspect of the disclosed technology comprises a computer program product comprising instructions which, when the program is executed by a computer, causes the computer to carry out the method according to any one of the embodiments of the first aspect disclosed herein. With this aspect of the disclosed technology, similar advantages and preferred features are present as in the other aspects.

Another aspect of the disclosed technology comprises a (non-transitory) computer-readable storage medium comprising instructions which, when executed by a computer, causes the computer to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

Another aspect of the disclosed technology comprises a system for triggering steering interventions for a vehicle. The system comprises control circuitry configured to obtain a first path and a second path representing a steering capability of the vehicle based on a steering capability model of the vehicle. The first path represents a steering capability of the vehicle towards a first lateral direction, and the second path representing a steering capability of the vehicle towards a second lateral direction opposite to the first lateral direction. Moreover, the first path and the second path substantially extend along a traveling direction of the vehicle, where each path defines a set of expected future positions of at least a portion of the vehicle in the event of a corresponding automated steering intervention, at a limit of the steering capability of the vehicle, being executed at a current moment in time. Further, in response to any one of the first path or the second path intersecting a set boundary on the road, the control circuitry is configured to the automated steering intervention so to cause the vehicle to steer away from the set boundary on the road. With this aspect of the disclosed technology, similar advantages and preferred features are present as in the other aspects.

Another aspect of the disclosed technology comprises a vehicle comprising a system for triggering steering interventions for a vehicle according to any one of the embodiments disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that the risk of having false positive triggers for automated steering interventions may be reduced.

An advantage of some embodiments is that the complexity of the triggering mechanism of the automated steering intervention functionality may be reduced, thereby providing a more responsive solution.

An advantage of some embodiments is that the followability of the steering intervention path once triggered may be improved without unnecessarily high safety margins.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic flowchart representation of a method for triggering steering interventions for a vehicle in accordance with some embodiments.
Fig. 2 is a schematic top-view illustration of a vehicle with projected steering capability paths in accordance with some embodiments.
Figs. 3a-3d is a series of schematic top-view illustrations of a vehicle triggering and executing a steering intervention in accordance with some embodiments.
Fig. 4 is a schematic illustration of a vehicle comprising a system for triggering steering interventions for a vehicle in accordance with some embodiments.
Fig. 5 illustrates, by way of example, a set of attainable lateral accelerations and lateral jerks of a vehicle.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

When a vehicle is to automatically perform a qualitative corrective, and in particular evasive, steering intervention, a good followability of the intervention trajectory or the intervention path is important. If the resulting intervention trajectory or intervention path has poor or uncertain followability one would either have to allow larger margins, for example by triggering the interventions earlier and thereby having more false interventions as a result, which reduces passenger comfort and user experience. Alternatively, one could accept a certain level of failure for the automated steering interventions, which imposes potentially unacceptable safety risks (e.g., vehicle leaving the lane/road during the intervention, or colliding with a Vulnerable Road User (VRU) or another vehicle during the intervention).

The term "steering intervention" is herein to be construed as encompassing both corrective steering interventions (may also be referred to as "corrective steering manoeuvre") and evasive steering interventions (may also be referred to as "evasive steering manoeuvre").

To this end, embodiments herein propose a solution for triggering steering interventions based on a steering capability of the vehicle. The steering capability of the vehicle defines how much the vehicle can steer to either side while executing a steering intervention at a limit of or a certain level of the steering capability given the current state of the vehicle. The steering capability can be defined by a steering capability model of the vehicle that accounts for the ramp and torque limitations of the vehicle's steering system and outputs an "attainable" lateral acceleration and an "attainable" lateral jerk given a current state of the vehicle. Then, using this steering capability model, one can estimate a "steering capability path" or "steering capability trajectory" for the vehicle, in real-time, should a steering intervention, at a limit of (or a certain level of) the steering capability of the vehicle, be triggered. The term "lateral jerk" may in the present context be understood as the rate of change of the vehicle's lateral acceleration over time.

Furthermore, the present inventors realized that given these "steering capability paths" or "steering capability trajectories", one could effectively use them as triggers for when a steering intervention should be triggered, and thereby obtain in a simple and robust manner, where the resulting intervention trajectory or intervention path would inherently be followable by the vehicle. In more detail, embodiments herein use the generated "steering capability paths" or "steering capability trajectories" and compare them to a set boundary on the road (e.g., a lane boundary or a road edge boundary), and once a "steering capability path" or "steering capability trajectory" intersects this set boundary, it is used as a trigger to execute a steering intervention, which is done by executing the "steering capability path" or "steering capability trajectory". It should be noted that the "set boundary on the road" need not necessarily be the estimated lane boundary or estimated road boundary, but may include an offset or safety margin from the actual lane or road boundary depending on system specifications. For example, the "set boundary" may be a fictive boundary extending in parallel with the estimated road boundary but 20 cm into the road, so that the "trigger" is actually when the "steering capability path" or "steering capability trajectory" intersects this "fictive boundary" (i.e., when the "steering capability path" or "steering capability trajectory" is 20 cm or less from the estimated road boundary).

Thereby, the herein proposed solution reduces the risk of triggering false interventions (by not imposing unnecessary margins) while not compromising safety of the occupants and other road users (by ensuring that the resulting path or trajectory is followable). Moreover, since the trigger for steering interventions is based on the same path/trajectory that is followed once the steering intervention is triggered, the overall steering intervention functionality may be rendered more responsive. This is in contrast to solutions where there are separate functions providing the trigger and the intervention path/trajectory, which may lead to inevitable response delays.

### Definitions

The term "steering intervention" may be construed as any action taken by the vehicle's control system to adjust the direction of the vehicle by controlling the vehicle's actuation mechanisms (steering, acceleration, deceleration). These interventions can be triggered for various reasons, such as path deviation correction - where if the vehicle deviates from its planned path or trajectory, the steering control system may intervene to bring the vehicle back on track, collision avoidance - when the vehicle detects an obstacle or an imminent collision, it may perform a steering intervention to steer away from the obstacle or to avoid the collision, lane keeping - where the vehicle may perform steering interventions to help keep the vehicle centred within its lane, especially in situations where the driver's input is insufficient or absent, manoeuvre execution - for example during complex manoeuvres such as lane changes or turns, the steering control system may perform interventions to execute these manoeuvres safely and smoothly.

The term "path" may be construed as an intended route that a vehicle should follow to reach its destination. It typically represents a sequence of points or waypoints that define the desired route. Paths are often planned based on factors such as road network, traffic conditions, speed limits, and any specific constraints or objectives. In the context of the present disclosure, a "steering capability path" accordingly represents the estimated route of the vehicle should a steering intervention be triggered, at a limit or certain level of the steering capability of the vehicle, at a current moment in time.

The term "trajectory" may be construed as the actual motion of the vehicle as it navigates along the path. In more detail, a trajectory may describe the specific sequence of positions and velocities that the vehicle follows over time. Trajectories may be influenced not only by the planned path but also by real-time factors such as vehicle dynamics, sensor readings, environmental conditions, and the actions of other vehicles or obstacles in the vicinity. In the present context, the term "path" is considered to encompass "trajectory" as it may be construed as a time-dependent path.

The term "steering capability" (may also be referred to as "steering capacity") may be construed as the vehicle's (or the steering system's) accepted/allowed maximum capability to execute steering interventions towards a lateral direction of the vehicle. Stated differently, the steering capability defines the expected path or the trajectory of the vehicle when the vehicle is executing a steering manoeuvre to the left or to the right at the limit of the capability of the vehicle's steering system. The limit may be set during design-time (e.g., by the OEM and/or the supplier of the steering system) and defined such that the vehicle can maintain an expected trajectory while executing the steering intervention and such that the driver will be able to safely control the vehicle if the steering intervention would be aborted during execution.

In some embodiments, the "steering capability" of a vehicle is defined by a set of attainable/allowable lateral accelerations and lateral jerks given a current speed of the vehicle and a current lateral acceleration or yaw rate of the vehicle. These attainable/allowable lateral accelerations and attainable/allowable lateral jerks can be used to derive an estimated path or trajectory of the vehicle should the vehicle execute a steering intervention at a limit or a certain level of the limit (e.g., 80% of the limit or 90% of the limit) of the vehicle's steering capability.

The "steering capability model" of the vehicle may be understood as a predefined computational or mathematical representation of the vehicle's steering behaviour and performance when operating at the limit of its steering capability. The "steering capability model" may be in the form of a look-up table that provides an actuator response given a steering request as input. The look-up table may for example be populated using simulations with a high-fidelity vehicle model that has been correlated to measurements and/or using measurements from tests with an actual vehicle.

In some embodiments, the look-up table may comprise a position or state of the vehicle at time t+1 given a state of the vehicle at time t while turning the vehicle at the limit or a certain level (e.g., 80% of the limit or 90% of the limit) of the steering capability of the vehicle. However, in some embodiments the look-up table may comprise a set of attainable lateral accelerations and lateral jerks at specific speeds of the vehicle, and the steering capability paths/trajectories may be computed by deriving a trajectory that requires the vehicle to be manoeuvred at or at a certain level (e.g., 80% or 90%) of attainable lateral accelerations and lateral jerks throughout the derived trajectory.

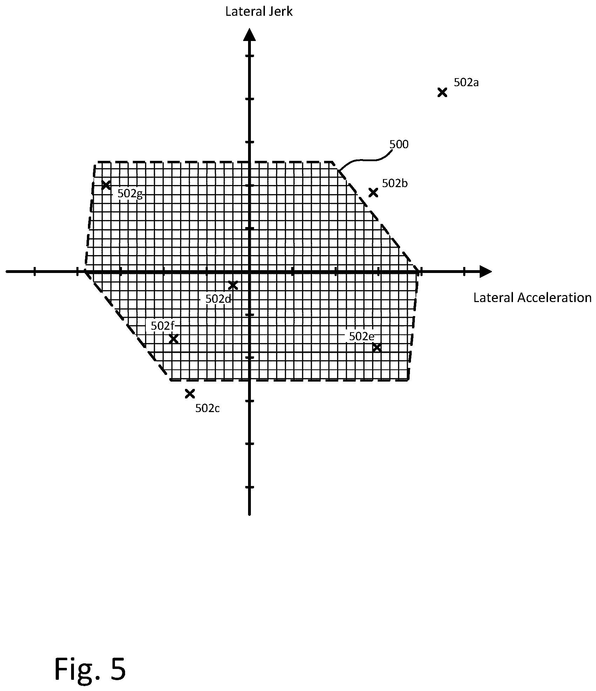

The wording "attainable", as in "attainable lateral acceleration" or "attainable lateral jerk", may in the present context be understood as values of lateral acceleration and lateral jerk that a steering system of the vehicle can achieve without diverging from a predicted vehicle trajectory. Put differently, the steering system (or the vehicle itself) may be limited in regards to what lateral accelerations or lateral jerk is possible or allowed to achieve. The limitations may be due to different reasons, such as physical limitations of the vehicle or other regulations associated with automated driving systems. For example, for ADS level 1 and level 2 features it is envisioned that lateral jerk" is predefined and set so that a driver of the vehicle will be able to control the vehicle for any single fault in the ADS and vehicle platform. These limitations may thus be represented the (maximum) "attainable lateral acceleration" or (maximum) "attainable by thresholds which can be determined as a function of steering limitations implemented in the vehicle, e.g. as a "safety limiter". The thresholds or limits of lateral acceleration and lateral jerk respectively, are further discussed in connection with Fig. 5.

### Example embodiments

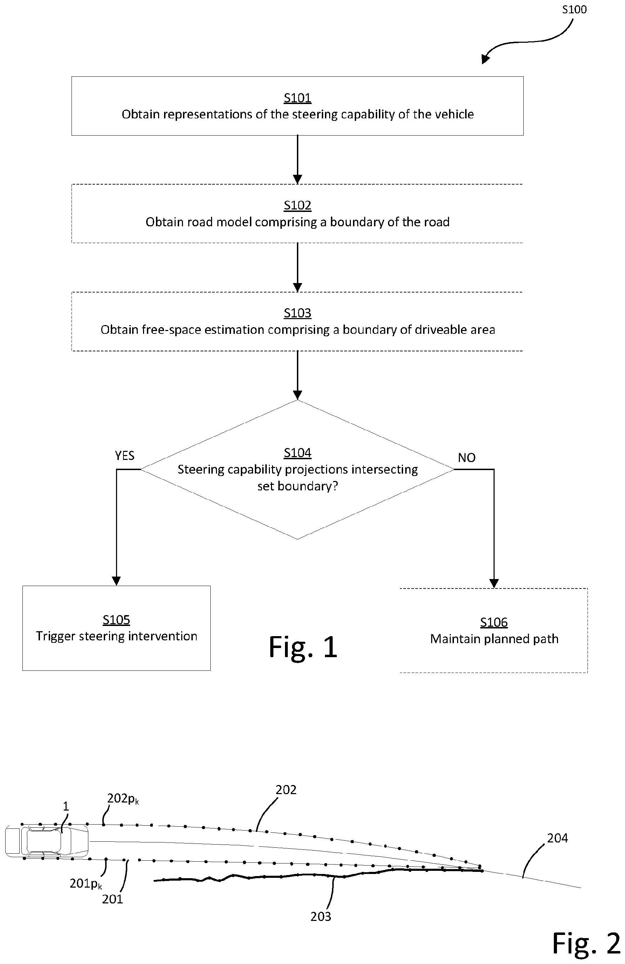

Fig. 1 is a schematic flowchart representation of a method S100 for triggering steering interventions for a vehicle. The method S100 is preferably a computer-implemented method S100, performed by a processing system of the vehicle. The processing system may for example comprise one or more processors and one or more memories coupled to the one or more processors, wherein the one or more memories store one or more programs that perform the steps, services and functions of the method S100 disclosed herein when executed by the one or more processors.

The method S100 comprises obtaining S101 a first path 201 and a second path 202 based on a steering capability model of the vehicle 1. In other words, the method S100 comprises obtaining representations 201, 202 of a steering capability of the vehicle. In more detail, first path 201 represents a steering capability of the vehicle towards a first lateral direction, and the second path 202 represents a steering capability of the vehicle towards a second lateral direction opposite to the first lateral direction. Furthermore, the first path 201 and the second path 202 substantially extend along a traveling direction of the vehicle. Here, each path 201, 202 defines a set of expected future positions 201pₖ, 202pₖ of at least a portion of the vehicle 1 in the event of a corresponding automated steering intervention, at a limit of the steering capability of the vehicle, being executed at a current moment in time.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. In other words, obtaining a path of the vehicle may encompass determining or computing a path of the vehicle. Thus, as used herein, "obtaining" may indicate that a parameter is received at a first entity/unit from a second entity/unit, or that the parameter is determined at the first entity/unit e.g. based on data received from another entity/unit.

It should be noted that the term "limit" in the "limit of the steering capability" may be a hard limit, meaning that it represents a maximum of the steering capability/capacity of the vehicle, or it may be a soft limit meaning that it represents a certain level of the steering capability of the vehicle. Stated differently, the "limit" in the "limit of the steering capability" may, by way of example, be at 80% of the steering capability of the vehicle, at 90% of the steering capability of the vehicle, or at 100% of the steering capability of the vehicle, depending on the associated specifications and particular realizations. An advantage of utilizing a "soft limit" is that the steering intervention function and other related functionality is allowed a margin of error when triggering and executing the steering intervention.

In some embodiments, the method S100 comprises obtaining S102 a road model comprising one or more boundaries of the road. Here, one or more boundaries of the road may be in the form of road edge boundaries or lane boundaries. In the present context, a "road model" refers to a digital representation of the road environment and its various attributes. This model provides information about at least the the road geometry and layout, but may further include surface conditions, signage, markings, and other relevant features necessary for the safe and efficient operation of autonomous vehicles. The road geometry and layout may encompass the shape and layout of the road, including lane boundaries, curvature, banking, elevation changes, and intersections. Typically, the road model is often integrated with localization and mapping data to provide accurate positioning information relative to the surrounding environment. This enables precise vehicle localization and helps maintain alignment with the road model during navigation.

In some embodiments, the method S100 comprises obtaining a free-space estimation comprising one or more boundaries of a drivable area. In the present context, the term "free-space" may be construed as identified and delineated areas of the road environment (around the vehicle) that are unobstructed and safe for the vehicle to traverse. Estimating free-space areas typically involve using the vehicle's sensors, such as cameras, lidar, radar, and ultrasonic sensors, in order to scan the surrounding environment to detect objects, obstacles, road boundaries, and other relevant features. These sensor inputs provide raw data about the vehicle's surroundings. It may further comprise using the sensor data to identify objects and obstacles in the environment, such as vehicles, pedestrians, cyclists, road debris, and stationary obstacles like guardrails or barriers. Furthermore, one may employ segmentation techniques to separate objects from the background and classify them based on their size, shape, motion, and other attributes. Furthermore, once obstacles are detected and segmented, the remaining areas of the road are considered as potential free space. This includes lanes, drivable surfaces, and safe zones for navigation. Moreover, the free-space estimation is often dynamic, meaning it continuously updates in real-time as the vehicle moves through the environment and encounters new obstacles or changes in road conditions. This ensures that the vehicle always has up-to-date information about the available space for navigation.

Further, the method S100 comprises in response to any one of the first path 201 or the second path 202 intersecting S104 a set boundary 203 on the road, triggering S105 the automated steering intervention so to cause the vehicle to steer away from the set boundary 203 on the road. Similarly, if none of the first path 201 or the second path 202 intersects the set boundary 203 on the road, the method S100 may comprise maintaining S106 a planned or intended path. Here, the "maintaining S105" may simply mean that the vehicle does not intervene in the steering of the vehicle while it is manually controlled by a driver, or that the steering intervention feature does not intervene with an autopilot functionality while the vehicle is in an autonomous mode.

As used herein, the term "in response to" may be construed to mean "when" or "upon" or "if" depending on the context. Similarly, the phrase "in response to determining" or "when it is determined" or "in an instance of" may be construed to mean "upon determining" or "if its determined" or "upon detecting and identifying occurrence of an event" or "in response to detecting occurrence of an event" depending on the context. Accordingly, the phrase "if X equals Y" may be construed as "when X equals Y", "when it is determined that X equals Y", "in response to X being equal to Y", or "in response to detecting/determining that X equals Y" depending on the context.

In some embodiments, the set boundary 203 on the road is an estimation of a lane boundary or a road boundary. The estimation of a lane boundary or road boundary may for example be given by the obtained S102 road model. Corrective steering interventions may be triggered in response to the first path 201 or the second path 202 intersecting a lane boundary or a road boundary. In some embodiments, the estimation of the lane boundary or the road boundary includes an offset defining a margin of error in the estimation.

In some embodiments, the set boundary 203 on the road is an estimation of an edge of a drivable space (e.g., free-space). This estimation of an edge of a drivable space may for example be given by the obtained S103 free-space estimation. Both corrective and evasive steering interventions may be triggered in response to the first path 201 or the second path 202 intersecting an edge of a drivable space. In some embodiments, the estimation of the edge of the drivable-space or free-space includes an offset defining a margin of error in the estimation. An advantage of using free-space or drivable space estimations for triggering steering interventions is that dynamic obstacles may be accounted for and avoided.

It should be noted that in some embodiments, the "set boundary" need not necessarily be a representation of an actual physical boundary defined by physical objects (lane markers, road edges, barriers, obstacles, etc.) but may be a fictive boundary that is set with a margin from the physical boundary. For example, if the set boundary is in the form of road edge, then the "set boundary" may be a projected line extending in parallel with the road edge but closer to the vehicle with a certain distance from the representation of the physical road edge (e.g., 10 cm, 20 cm, 30 cm from the road edge towards the vehicle). In practice, this would mean that the steering intervention is triggered slightly earlier, and does not require the steering capability path to actually intersect the representation of the physical boundary. Thereby, one may also allow the steering intervention paths to define a set of expected future positions of at least a portion of the vehicle in the event of a corresponding automated steering intervention, at a "hard limit" of the steering capability of the vehicle, being executed at a current moment in time, without operating directly at the border of what the vehicle is capable of handling.

In other words, one can allow for a margin of error in the steering intervention functionality by using a "hard limit" in the "limit of the steering capability" together with an offset of the set boundary relative to the actual boundary of the road, or use a "soft limit" without any offset between the set boundary and the actual boundary of the road.

Executable instructions for performing these functions are, optionally, included in a non-transitory computer-readable storage medium or other computer program product configured for execution by one or more processors.

Turning to Fig. 2, a schematic top-view illustration of a vehicle 1 with projected steering capability paths 201, 202 (i.e., "first path" and "second path") in accordance with some embodiments is illustrated. Here, the vehicle 1 is following a path or trajectory that slightly pulls to the right, as indicated by the projected yaw rate 204. The first path 201 represents a left steering capability- i.e., the expected path or trajectory of at least a portion of the vehicle should an automated steering intervention be executed, to the left, at a limit of the steering capability of the vehicle 1. Similarly, the second path 202 represents a right steering capability - i.e., the expected path or trajectory of at least a portion of the vehicle 1 should an automated steering intervention be executed, to the right, at a limit of the steering capability of the vehicle 1.

In more detail, the steering capability paths 201, 202 extend along a corresponding lateral side of the vehicle, effectively illustrating the expected positions of the lateral edges of the vehicle in the event of an automated steering intervention, at the limit of the steering capability, being executed. In some embodiments, the steering capability paths 201, 202 represent the expected path or trajectory of the corresponding back wheel of the vehicle, or the corresponding lateral edges of the rear axis of the vehicle. By using the lateral edge, back wheel, or lateral edges of the rear axis of the vehicle one can reduce the risk of any part of the vehicle crossing the set boundary of the road.

As mentioned, the first and second paths 201, 202 are based on a steering capability model of the vehicle. In some embodiments, the steering capability model outputs (or otherwise provides) a set of discrete points 201pₖ, 202pₖ representing the set of expected future positions of at least the portion of the vehicle (e.g., lateral edges of the rear axis) in the event of the corresponding automated steering intervention, at the steering capability of the vehicle 1, being executed at a current moment in time, based on a current state of the vehicle 1. The current state of the vehicle may include a current velocity of the vehicle together with a current yaw rate of the vehicle 1 or a current lateral acceleration of the vehicle 1.

In some embodiments, the first path 201 defines a left steering capability path and the second path 202 defines a right steering capability path. Accordingly, the left steering capability path 201 may define a path representing a set of expected future positions 201pₖ of at least a portion of the right side of the vehicle at a set of future moments in time should a left steering intervention be executed. Furthermore, the right steering capability path 202 may define a path representing a set of expected future positions 202pₖ of at least a portion of the left side of the vehicle at the set of future moments in time should a right steering intervention be executed.

Further, in some embodiments, the steering capability model of the vehicle is dependent on a ramp limitation and a torque limitation of a steering system of the vehicle. Here, the ramp limitation defines a restriction on a rate at which a steering input can change for the steering system of the vehicle and the torque limitation defines a restriction on an amount of torque or force that can be applied to the steering system of the vehicle 1.

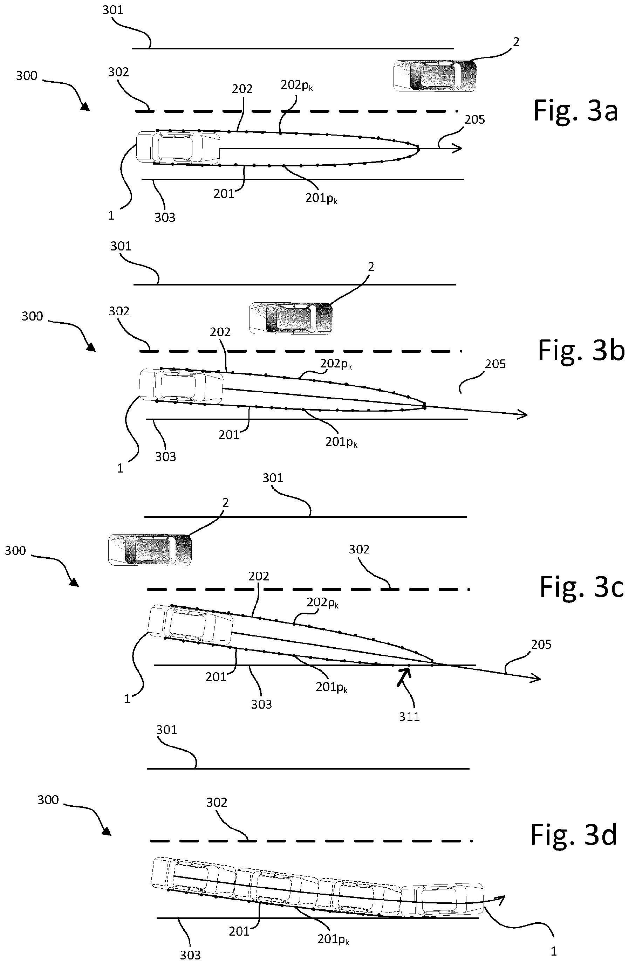

Figs. 3a to 3d are a series of schematic illustrations of a vehicle 1 where an automated steering intervention is triggered and executed in accordance with some embodiments. In more detail, Figs. 3a-3d depict a temporal development of a scenario where a vehicle 1 is traveling on a road 300 with oncoming traffic 2 in an adjacent lane separated by broken line lane markers 302. Moreover, the outer edges of the lanes are indicated by lines 301 and 303 representing a lane boundary or a road boundary.

In Fig. 3a, the ego-vehicle 1 (may also be referred to as host vehicle) is traveling in a direction substantially parallel with the extension of the road as indicated by arrow 205 representing an expected or planned path of the vehicle 1. Furthermore, the vehicle's 1 steering capability paths 201, 202 are indicated and represent the steering capability of the vehicle 1 towards the left (first path 201) and towards the right (second path 202), respectively. The steering capability paths 201, 202 may be in the form of steering capability trajectories that may be represented by a number of points (may be denoted as pₖ), where k goes from 0 to any number N, each point 201pₖ, 202pₖ corresponding to a different time instance (or position along the path). Each point pₖ may comprise one or more parameters, such as a position, a velocity, an acceleration and a jerk of the vehicle 1 in that point. The number of points pₖ as illustrated herein is merely for illustrative purposes and is not necessarily indicative of an actual number or interval between points 201pₖ, 202pₖ.

In particular, the discrete points 201pₖ, 202pₖ, and consequently the steering capability paths 201, 202 may represent a set of expected future positions of at least a portion of the vehicle 1 (e.g., a respective lateral edge of the vehicle 1) in the event of a corresponding automated steering intervention, at a limit of the steering capability of the vehicle 1, being executed at a current moment in time. As previously mentioned, the steering capability paths 201, 202 may be generated in dependence of a current state of the vehicle 1, where the current state of the vehicle 1 may comprise a current velocity of the vehicle 1, and a current yaw rate of the vehicle or current lateral acceleration of the vehicle 1.

As the condition for triggering a steering intervention is not fulfilled (i.e., none of the steering capability paths 201, 202 are intersecting a set boundary 301, 302, 303 of the road 300), no steering intervention is triggered.

In a subsequent time step, the vehicle 1 starts to veer/drift to the right, as indicated in Fig. 3b. This may for example be caused by driver fatigue or inattention, or in the case of ADS-controlled driving, due to a malfunction of the ADS or any subfunction thereof. Still, as the condition for triggering a steering intervention is still not fulfilled, the vehicle 1 is allowed to maintain its course.

However, in a following time step depicted in Fig. 3c, the vehicle 1 has veered further towards the right. Here, the left steering capability path 201 has intersected a set boundary of the road 300 (here in the form of a lane or road boundary 303), causing a trigger of a left steering intervention so to steer the vehicle 1 away from the lane or road boundary 303. As mentioned in the foregoing, the boundaries 301, 302, 303 may be given by a road model generated by the ADS or a function thereof (e.g., a localization or perception functionality). Accordingly, in response to the left steering capability path 201 intersecting the road boundary 303, an automated steering intervention is triggered so to cause the vehicle 1 to steer away from the road boundary 303.

Once the automated steering intervention is triggered, the vehicle 1 is controlled so to maneuver away from the boundary 303 that was intersected by the steering capability path 201. In some embodiments, the automated steering intervention causes the vehicle to execute the steering intervention path 201 (that intersected the set boundary 303) so to steer away from the set boundary 303, as for example depicted in Fig. 3d. In other words, the vehicle 1 may execute a steering intervention at the limit of the steering capability as defined by the steering capability path 201 (that intersected the set boundary 303).

Accordingly, the solution proposed herein for triggering steering interventions may reduce the risk for false positives (i.e., too early triggers) since the usage of steering capability paths as basis for triggering decisions result in triggers at a late stage as possible without sacrificing safety. Moreover, the steering intervention functionality may be made more responsive as the same steering capability paths used as basis for the triggering decisions can also be used to define the trajectory of the steering intervention to be executed.

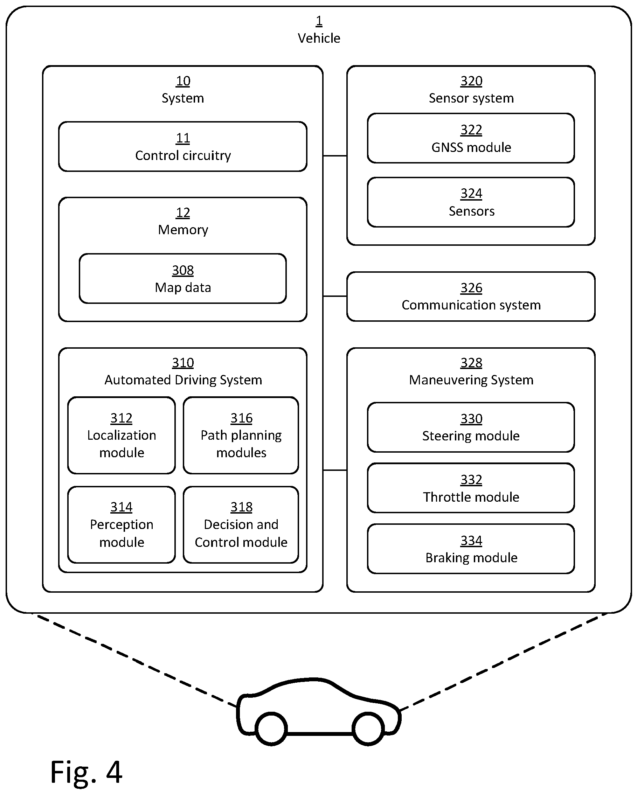

Fig. 4 is a schematic illustration of an ADS-equipped vehicle 1 comprising a system 10 for triggering steering interventions in accordance with some embodiments. As used herein, a "vehicle" is any form of motorized transport. For example, the vehicle 1 may be any road vehicle such as a car (as illustrated herein), a motorcycle, a (cargo) truck, a bus, etc.

The system 10 comprises control circuitry 11 and a memory 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the system 10 may form a part of the ADS 310, i.e. the system 10 may be implemented as a module or feature of the ADS. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. The map data may for example define a road model of a surrounding environment of the vehicle. It is contemplated that the memory 12, even though illustrated as a separate element from the ADS 310, may be provided as an integral element of the ADS 310. In other words, according to an exemplary embodiment, any distributed or local memory device may be utilized in the realization of the present inventive concept. Similarly, the control circuitry 11 may be distributed e.g. such that one or more processors of the control circuitry 11 is provided as integral elements of the ADS 310 or any other system of the vehicle 1. In other words, according to an exemplary embodiment, any distributed or local control circuitry device may be utilized in the realization of the present inventive concept. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 4. Moreover, the vehicle 1 may comprise further elements than those shown in Fig. 4. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 4 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as Wi-Fi^{®}, LoRa^{®}, Zigbee^{®}, Bluetooth^{®}, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The perception module 314 may for example be configured to generate and output a road model and/or a free-space area estimation (or drivable-space estimation).

The localization module 312 and/or the perception module 314 may be communicatively connected to the sensor system 320 in order to receive sensory data from the sensor system 320. The localization module 312 and/or the perception module 314 may further transmit control instructions to the sensor system 320.

In more detail, control circuitry 11 of the system 10, is configured to obtain a first path and a second path representing a steering capability of the vehicle 1 based on a steering capability model of the vehicle. Here, the first path represents a steering capability of the vehicle towards a first lateral direction (e.g., left), and the second path representing a steering capability of the vehicle towards a second lateral direction (e.g., right) opposite to the first lateral direction. Moreover, the first path and the second path substantially extend along a traveling direction of the vehicle, wherein each path defines a set of expected future positions of at least a portion of the vehicle 1 in the event of a corresponding automated steering intervention, at a limit of the steering capability of the vehicle 1, being executed at a current moment in time.

Further, in response to any one of the first path or the second path intersecting a set boundary on the road, the control circuitry 11 is configured to the automated steering intervention so to cause the vehicle to steer away from the set boundary on the road.

Fig. 5 illustrates, by way of example, a set 500 of attainable lateral accelerations and lateral jerks of a vehicle. The set 500 of attainable lateral accelerations and lateral jerks illustrated herein is merely to be seen as an illustrative example for improved understanding, and may not represent an actual set 500 of attainable lateral accelerations and lateral jerks. It should be further noted that the set 500 of attainable lateral accelerations and lateral jerks may be dependent on the speed of the vehicle. Thus, the illustrated set 500 of attainable lateral accelerations and lateral jerks may only be representative of a certain speed. In some embodiments, several different sets of attainable lateral accelerations and lateral jerks associated with various velocities of the vehicle may be used.

The set 500 of attainable lateral accelerations and lateral jerks are herein represented by a region in the two-dimensional space spanned by a first axis of lateral accelerations and a second axis of lateral jerk. Further illustrated are a number of points 502a-g. Each point 502a-g represents an example of predicted lateral acceleration and lateral jerk of a predicted vehicle trajectory. Points which are inside the region representing the set 500 of attainable lateral accelerations and jerk (i.e. points 502d-g) are determined at attainable. Points which are outside the region representing the set 500 of attainable lateral accelerations and jerk (i.e. points 502a-c) are determined as unattainable.

Referring back to Figs. 2 and 3a-d, the points 201pₖ, 202pₖ may be derived from the points at the border (or at a certain distance from the border) of the set 500 of attainable lateral accelerations and lateral jerks. In other words, the steering capability paths/trajectories 201, 202 may be formed on basis of the points residing at the border (or at a certain distance from the border) of the set 500 of attainable lateral accelerations and lateral jerks.

The set 500 of attainable lateral accelerations and lateral jerks may be represented by a set of values of attainable lateral accelerations and lateral jerks. The steering intervention paths/trajectories, that are to define a set of expected future positions of at least a portion of the vehicle in the event of an automated steering intervention, at a limit of the steering capability, being executed at a current moment in time may then be determined or otherwise derived by ensuring that the lateral acceleration/jerk at each projected future position is at the border (or at a certain distance from the border) of the set 500 of attainable lateral accelerations and lateral jerks. However, in some embodiments, the steering capability model is configured to account for the set 500 of attainable lateral accelerations and lateral jerks.

As indicated in Fig. 5, the attainable lateral accelerations and lateral jerks may be negative or positive values depending on the direction of the steering intervention and the coordinate system being used, as readily understood by the skilled person in the art.

The present invention has been presented above with reference to specific embodiments. However, other embodiments than the above described are possible and within the scope of the invention. Different method steps than those described above, performing the method by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

The processor(s) 11 (associated with the system 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various obtaining and triggering steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A method (S100) for triggering steering interventions for a vehicle (1), the method (S100) comprising:
obtaining (S101) a first path (201) and a second path (202) based on a steering capability model of the vehicle, the first path (201) representing a steering capability of the vehicle towards a first lateral direction, and the second path (202) representing a steering capability of the vehicle towards a second lateral direction opposite to the first lateral direction;
wherein the first path (201) and the second path substantially extend along a traveling direction of the vehicle, wherein each path defines a set of expected future positions of at least a portion of the vehicle in the event of a corresponding automated steering intervention, at a limit of the steering capability of the vehicle, being executed at a current moment in time;
in response to any one of the first path (201) or the second path (202) intersecting a set boundary (203) on the road (300), triggering (S105) the automated steering intervention so to cause the vehicle to steer away from the set boundary (203) on the road.

2. The method (S100) according to claim 1, wherein the steering capability model outputs a set of discrete points (201pₖ, 202pₖ) representing the set of expected future positions of at least the portion of the vehicle in the event of the corresponding automated steering intervention, at the limit of the steering capability of the vehicle (1), being executed at a current moment in time, based on a current state of the vehicle (1).

3. The method (S100) according to claim 2, wherein the current vehicle state includes a current velocity of the vehicle, and a current yaw rate of the vehicle or a current lateral acceleration of the vehicle (1).

4. The method (S100) according to any one of claims 1-3, wherein the first path (201) defines a left steering capability path and the second path (202) defines a right steering capability path,
wherein the left steering capability path defines a path representing a set of expected future positions of at least a portion of the right side of the vehicle at a set of future moments in time should a left steering intervention be executed, and
wherein the right steering capability path defines a path representing a set of expected future positions of at least a portion of the left side of the vehicle at the set of future moments in time should a right steering intervention be executed.

5. The method (S100) according to any one of claims 1-4, wherein the steering capability model of the vehicle is dependent on a ramp limitation and a torque limitation of a steering system of the vehicle, and
wherein the ramp limitation defines a restriction on a rate at which a steering input can change for the steering system of the vehicle and the torque limitation defines a restriction on an amount of torque or force that can be applied to the steering system of the vehicle.

6. The method (S100) according to any one of claims 1-5, wherein the set boundary (203) on the road is an estimation of a lane boundary or a road boundary.

7. The method (S100) according to any one of claims 1-5, wherein the set boundary (203) on the road is an estimation of an edge of a driveable-space.

8. A computer program product comprising instructions which, when the program is executed by a computer, causes the computer to carry out the method (S100) according to any one of claims 1-7.

9. A computer-readable storage medium comprising instructions which, when executed by a computer, causes the computer to carry out the method (S100) according to any one of claims 1-7.

10. A system (10) for triggering steering interventions for a vehicle (1), the system comprising control circuitry (11) configured to:
obtain a first path (201) and a second path (202) representing a steering capability of the vehicle (1) based on a steering capability model of the vehicle, the first path (201) representing a steering capability of the vehicle towards a first lateral direction, and the second path (202) representing a steering capability of the vehicle towards a second lateral direction opposite to the first lateral direction;
wherein the first path (201) and the second path substantially extend along a traveling direction of the vehicle, wherein each path defines a set of expected future positions of at least a portion of the vehicle (1) in the event of a corresponding automated steering intervention, at a limit of the steering capability of the vehicle (1), being executed at a current moment in time;
in response to any one of the first path (201) or the second path (202) intersecting a set boundary (203) on the road (300), trigger the automated steering intervention so to cause the vehicle to steer away from the set boundary (203) on the road.

11. The system according to claim 10, wherein the steering capability model outputs a set of discrete points (201pₖ, 202pₖ) representing the set of expected future positions of at least the portion of the vehicle in the event of the corresponding automated steering intervention, at the limit of the steering capability of the vehicle (1), being executed at a current moment in time, based on a current state of the vehicle (1).

12. The system according to claim 11, wherein the current vehicle state includes a current velocity (204) of the vehicle, and a current yaw rate of the vehicle or a current lateral acceleration of the vehicle (1).

13. The system according to any one of claims 10-12, wherein the first path (201) defines a left steering capability path and the second path (202) defines a right steering capability path,
wherein the left steering capability path defines a path representing a set of expected future positions of at least a portion of the right side of the vehicle at a set of future moments in time should a left steering intervention be executed, and
wherein the right steering capability path defines a path representing a set of expected future positions of at least a portion of the left side of the vehicle at the set of future moments in time should a right steering intervention be executed.

14. The system according to any one of claims 10-13, wherein the steering capability model of the vehicle is dependent on a ramp limitation and a torque limitation of a steering system of the vehicle, and
wherein the ramp limitation defines a restriction on a rate at which a steering input can change for the steering system of the vehicle and the torque limitation defines a restriction on an amount of torque or force that can be applied to the steering system of the vehicle.

15. A vehicle (1) comprising a system (10) according to any one of claims 10-14.
